(19) Europäisches Patentamt

European Patent Office

Office européen des brevets

(11) Veröffentlichungsnummer: **0 312 815 B1**

(12) **EUROPÄISCHE PATENTSCHRIFT**

(45) Veröffentlichungstag der Patentschrift: **29.01.92**

(21) Anmeldenummer: **88116014.7**

(22) Anmeldetag: **28.09.88**

(51) Int. Cl.⁵: **B60P 3/40**, B62D 13/02

---

(54) **Langholztransporter.**

---

(30) Priorität: **14.10.87 DE 8713839 U**

(43) Veröffentlichungstag der Anmeldung:
**26.04.89 Patentblatt 89/17**

(45) Bekanntmachung des Hinweises auf die
Patenterteilung:
**29.01.92 Patentblatt 92/05**

(84) Benannte Vertragsstaaten:
**AT BE CH DE FR LI**

(56) Entgegenhaltungen:
**DE-A- 3 533 153**
**DE-U- 8 616 691**
**DE-U- 8 703 589**
**DE-U- 8 713 839**

(73) Patentinhaber: **DOLL FAHRZEUGBAU GMBH**
**Industriestrasse 13**
**W-7603 Oppenau(DE)**

(72) Erfinder: **Seidel, Dieter**
**Schutterstrasse 6**
**W-7608 Eckartsweier(DE)**

(74) Vertreter: **Patentanwälte Grünecker, Kinkel-**
**dey, Stockmair & Partner**
**Maximilianstrasse 58**
**W-8000 München 22(DE)**

EP 0 312 815 B1

## Beschreibung

Die Erfindung bezieht sich auf einen Langholztransporter mit einem Zugfahrzeug und einem wenigstens zweiachsigen Anhänger, der einen gegenüber seinem Fahrgestell drehbaren Drehschemel zur Aufnahme der Ladung und eine gelenkte Achse aufweist, die bei mindestens einem festsetzbaren hydraulischen Lenkzylinder mit dem Drehschemel wirkungsverbunden ist.

Solche Langholztransporter sind aus der Praxis bekannt s. z.B. DE-U-8 703 589. Die Anhänger werden als Selbstlenkanhänger bezeichnet, was bedeutet, daß im normalen Fahrbetrieb auf der Straße die Lenkung des Anhängers ausschließlich über die durch die Ladung bewirkte Verdrehung des Drehschemels gegenüber dem Fahrgestell bewirkt wird. Diese Drehung des Drehschemels wird über den im normalen Fahrbetrieb über einen Klemmkopf festgesetzten hydraulischen Lenkzylinder auf die gelenkte Achse übertragen so daß diese Achse in Abhängigkeit der Bewegung des Drehschemels gelenkt wird. Zum Rangieren des Fahrzeuges wird der Klemmkopf gelöst, so daß der hydraulische Lenkzylinder über eine hydraulische Lenkeinrichtung betätigt werden kann. Beim Rangieren läßt sich also die Lenkbewegung der gelenkten Achse unabhängig von einer Drehbewegung des Drehschemels ausführen. Nachteilig an dem bekannten Langholztransporter ist es, daß der Klemmkopf, der auf die Kolbenstange des Hydraulikzylinders wirkt, verhältnismäßig teuer ist. Zudem wird die Kolbenstange durch den Klemmkopf mechanisch beansprucht, was zu Dichtigkeitsproblemen des hydraulischen Lenkzylinders führen kann. Von besonderem Nachteil ist jedoch, daß das Ansprechverhalten des Klemmkopfes beim Lösen desselben sehr träge ist. Die über den hydraulischen Lenkzylinder wirkende Zusatzlenkung wird nämlich nicht nur beim Rangieren des Fahrzeuges benötigt, sondern auch dann, wenn der Langholztransporter im Wald auf unwegsamen Gelände gefahren wird. Fährt z.B. der Anhänger im Gelände auf einen Graben zu, so muß während der Fahrt der hydraulische Lenkzylinder schnell gelöst werden, damit ein Unterstützen der Lenkung des Anhängers erfolgen kann. Das Ansprechverhalten der bekannten Klemmköpfe ist jedoch so schlecht, daß bis zu deren Lösen, d.h. also bis die Lenkung einsetzen kann, bis zu einer Sekunde vergehen. Bei einem nur mit 20 km/h fahrendem Langholztransporter bedeutet das, daß dieser in der Zwischenzeit bereits eine Strecke von etwa 6 m zurückgelegt hat. Oftmals kommt dann die unterstützende Lenkung zu spät, so daß der Anhänger bereits in den Graben gefahren ist.

Der Erfindung liegt daher die Aufgabe zugrunde, einen Langholztransporter der eingangs genannten Art zu verbessern, wobei insbesondere das Ansprechverhalten des festsetzbaren hydraulischen Lenkzylinders beim Lösen desselben verbessert werden soll.

Diese Aufgabe wird erfindungsgemäß dadurch gelöst, daß der Lenkzylinder als Zweikreiszylinder mit zwei über eine Kolbenstange verbundenen Kolben ausgebildet ist. Beim normalen Fahrbetrieb wird der Lenkzylinder dadurch festgesetzt, daß beide Kreise des Lenkzylinders verriegelt werden. Dies geschieht, wie an sich bekannt ist, durch Hydraulikventile, die sehr schnell ansprechen. Da keine mechanische Klemmung des Lenkzylinders erfolgt, kann dieser sehr schnell gelöst werden, so daß die Zusatzlenkung ohne große Zeitverzögerung in Gang gesetzt werden kann. Vorteilhaft ist auch, daß ein solcher Lenkzylinder wesentlich preisgünstiger herzustellen ist, da der Klemmkopf entfallen kann. Da zwischen Kolbenstange und Zylindergehäuse keine mechanische Verbindung besteht und das Festsetzen des hydraulischen Lenkzylinders ausschließlich auf hydraulischem Wege geschieht, verbessert sich auch die Dämpfung der Lenkung. Stoßbelastungen, die auf den Drehschemel ausgeübt werden, werden durch die in dem Lenkzylinder befindliche Hydraulikflüssigkeit weitgehend abgedämpft. Dadurch wird weniger Verschleiß nicht nur auf der Kolbenstange sondern auch bei den Aufhängungspunkten des Zylinders sowie der Drehkränze erzielt.

Die Schaltung für die Betätigung und die Festsetzung des Lenkzylinders vereinfacht sich wesentlich gegenüber dem herkömmlichen Langholztransporter.

Gemäß einer bevorzugten Ausführungsform weist der Lenkzylinder einen ersten Zylinderabschnit und einen zweiten Zylinderabschnitt auf, der gegenüber dem ersten Zylinderabschnitt durch einen von der Kolbenstange durchsetzten Zylinderboden abgedichtet ist, wobei ein erster Kolben in dem ersten Zylinderabschnitt und ein zweiter Kolben in dem zweiten Zylinderabschnitt angeordnet ist und wobei ferner jeder Kolben den zugehörigen Zylinderabschnitt in zwei gegeneinander abgedichtete Zylinderkammern unterteilt. Auf diese Weise kann jeder der beiden Kolben unabhängig von dem anderen und in unterschiedlicher Richtung mit Druck beaufschlagt werden. Das bedeutet, daß selbst dann, wenn ein Kreis des Lenkzylinders ausfällt, sowohl das Festsetzen des Zylinders als auch eine aktive Betätigung des Lenkzylinders, beispielsweise zum Rangieren des Langholztransporters möglich ist.

Es ist vorteilhaft, wenn zumindest die Zylinderkammern des ersten Zylinderabschnitts mit jeweils einer Steuerleitung verbunden sind, die an eine hydraulische Lenkeinrichtung angeschlossen sind.

Ein Festsetzen des Lenkzylinders läßt sich bereits auf einfache Weise dadurch erreichen, daß in den Steuerleitungen Rückschlagventile angeordnet sind, die bei Druckanstieg in der jeweiligen Zylinderkammer schließen. Das bedeutet, daß sobald die gelenkte Achse oder der Drehschemel eine Verschiebung der Kolben in dem Lenkzylinder versucht, die Zylinderkammern nach außen abgedichtet sind, so daß der Kolben auf hydraulischem Wege verriegelt ist.

Ein einfaches und schnelles Lösen der Verriegelung wird auf vorteilhafte Weise gewährleistet, wenn die Rückschlagventile mit der jeweils anderen Steuerleitung über eine Hilfsleitung derart verbunden sind, daß das jeweilige Rückschlagventil bei Druckanstieg in der anderen Steuerleitung geöffnet wird. Das bedeutet, daß sobald die hydraulische Lenkeinrichtung betätigt wird, was stets mit einem Druckanstieg in einer der Steuerleitungen verbunden ist, das Rückschlagventil der jeweils anderen Steuerleitung entriegelt wird, so daß die Lenkbetätigung des Lenkzylinders ohne Zeitverlust erfolgt. Die Entriegelung erfolgt vielmehr automatisch.

Für eine einfache und schnelle Betätigung sowie ein schnelles Lösen und Verriegeln des Lenkzylinders ist es günstig, wenn die hydraulische Lenkeinrichtung ein 4/3-Wegeventil aufweist, wobei an dessen zwei Eingängen jeweils eine Steuerleitung angeschlossen ist und wobei an jeweils einem der anderen Eingänge eine Druckpumpe und ein Ölsumpf angeschlossen sind. Wie allgemein bekannt, handelt es sich bei einem 4/3-Wegeventil um ein Ventil mit vier Eingängen und drei Schaltstellungen, wobei in einer ersten Schaltstellung paarweise jeweils zwei Eingänge miteinander verbunden sind, während in einer zweiten Schaltstellung die Einänge überkreuz verbunden sind. In einer dritten Schaltstellung sind die beiden Eingänge, an denen die Steuerleitungen angeschlossen sind, entweder verriegelt oder mit dem Ölsumpf verbunden.

Obwohl auch der zweite Zylinderabschnitt, wie der erste Zylinderabschnitt, mit Steuerleitungen der Lenkeinrichtung verbunden sein kann, ist es bereits ausreichend und kostengünstiger, wenn die Zylinderkammern des zweiten Zylinderabschnitts jeweils mit einer Sperrleitung verbunden sind, wobei die beiden Sperrleitungen in jeweils einen Eingang eines 2/2-Wegeventils münden, das in einer ersten Schaltstellung die Sperrleitungen verriegelt und in einer zweiten Schaltstellung die Sperrleitungen auf Umlauf schaltet. Bei dieser Ausgestaltung wird lediglich ein Zylinderabschnitt zum aktiven Lenken beim Rangieren des Langholztransporters verwendet, während der zweite Zylinderabschnitt ausschließlich zum Festsetzen des Lenkzylinders dient.

Im folgenden wird ein Ausführungsbeispiel der Erfindung anhand einer Zeichnung näher erläutert. Es zeigen:

Fig. 1     in einer Seitenansicht einen erfindungsgemäßen Langholztransporter,

Fig. 2     in einer schematischen Draufsicht das Fahrgestell des Langholztransporters aus Fig. 1,

Fig. 3     in einer Seitenansicht den Anhänger des Langholztransporters aus Fig. 1,

Fig. 4     den Anhänger aus Fig. 3 in einer schematischen Draufsicht, und

Fig. 5     einen hydraulischen Lenkzylinder des Anhängers aus den Fig. 3 und 4.

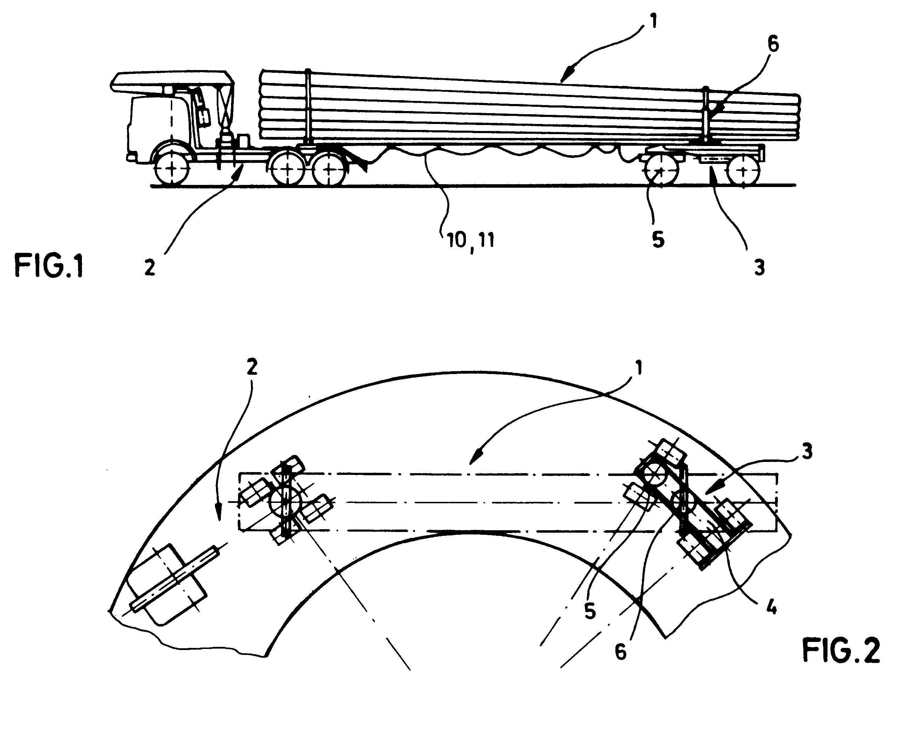

In Fig. 1 ist ein erfindungsgemäßer Langholztransporter 1 in Seitenansicht zu erkennen. Der Langholztransporter 1 umfaßt ein Zugfahrzeug 2 und einen zweiachsigen Anhänger 3 mit einem Fahrgestell 4, einer gelenkten Vorderachse 5 und einem gegenüber dem Fahrgestell 4 drehbaren Drehschemel 6, der die Ladung aufnimmt.

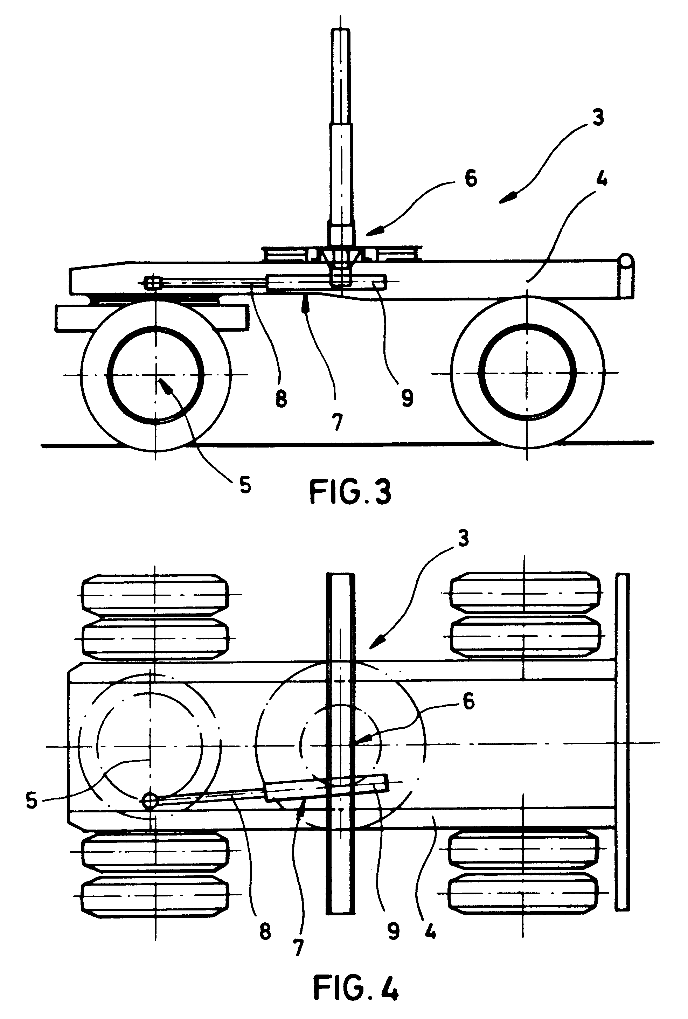

Wie besser aus den Fig. 3 und 4 erkennbar ist, weist der Anhänger 3 auch einen hydraulischen Lenkzylinder 7 auf, dessen Kolbenstange 8 mit der Vorderachse 5 und dessen Zylindergehäuse 9 mit dem Drehschemel 6 verbunden ist. Der Lenkzylinder 7 ist über Steuerleitungen 10 und 11 mit einer am Zugfahrzeug befindlichen Nach-Lenkeinrichtung 12 verbunden. Der Lenkzylinder 7 kann festgesetzt, d.h. in seiner Länge arretiert werden, so daß er als einfacher Lenker zwischen dem Drehschemel 6 und der Vorderachse 5 wirkt.

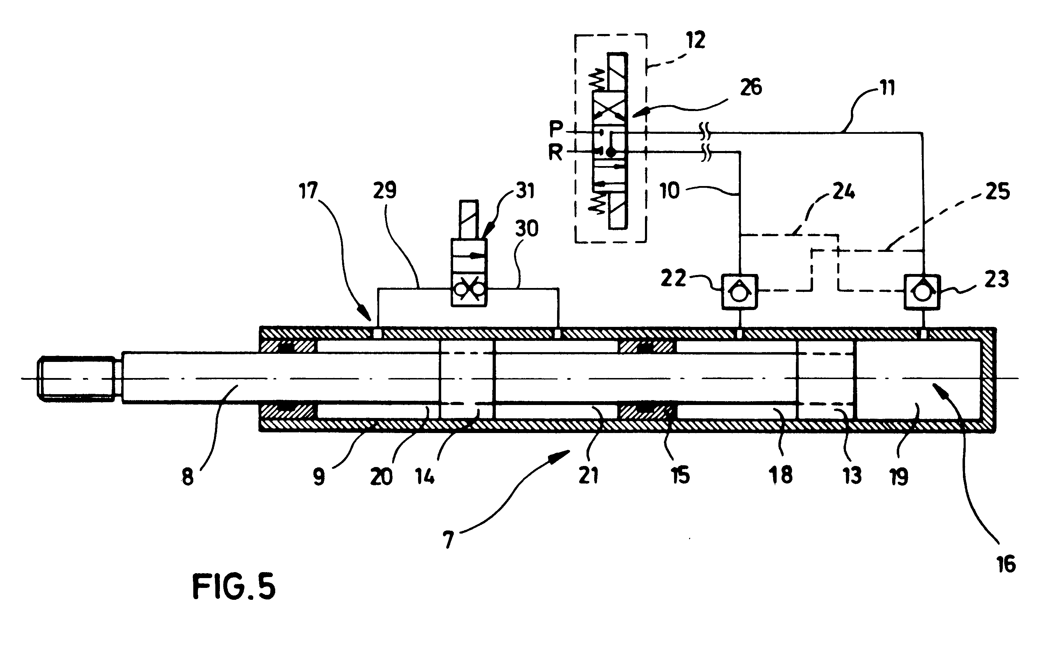

Wie besser aus der Fig. 5 ersichtlich ist, ist der Lenkzylinder 7 als Zweikreiszylinder ausgebildet mit zwei über die Kolbenstange 8 verbundenen Kolben 13 und 14. Das Gehäuse 9 des Lenkzylinders 7 ist durch einen Zylinderboden 15 in einen ersten Zylinderabschnitt 16 und in einen zweiten Zylinderabschnitt 17 unterteilt. Der Zylinderboden 15 wird von der Kolbenstange 8 durchsetzt und ist gegenüber dieser abgedichtet. In jeweils einem der Zylinderabschnitte 16 und 17 ist einer der Kolben 13 bzw. 14 derart angeordnet, daß er den jeweiligen Zylinderabschnitt 16 bzw. 17 in zwei gegeneinander abgedichtete Zylinderkammern 17 bis 21 unterteilt.

Die beiden Zylinderkammern 18 und 19 des ersten Zylinderabschnittes 16 sind an die Steuerleitungen 10 und 11 angeschlossen. In den Steuerleitungen 10 und 11 sind nahe an dem Lenkzylinder 7 Rückschlagventile 22 und 23 angeordnet. Wie aus der Zeichnung ersichtlich ist, ist die Wirkrichtung der Rückschlagventile derart, daß sie bei einem Druckanstieg in der jeweiligen Zylinderkammer 18 bzw. 19 schließen.

Wie mit den gestrichelten Linien in Fig. 5 angedeutet ist, sind die Rückschlagventile 22 und 23 mit der jeweils anderen Steuerleitung 11 bzw. 10 verbunden. Die Verbindung ist derart, daß z.B. bei einem Druckanstieg in der Steuerleitung 10 auch der Druck in der Hilfsleitung 24 ansteigt und dadurch ein Öffnen des Rückschlagventiles 23 bewirkt. Das gleiche geschieht mit dem Rückschlagventil 22, sobald der Druck in der Steuerleitung 11 ansteigt.

Die in dem Zugfahrzeug befindliche hydraulische Nach-Lenkeinrichtung 12 umfaßt ein 4/3-Wegeventil 26, an dem einerseits die beiden Steuerleitungen 10 und 11 und andererseits eine Druckpumpe P und ein Ölsumpf R angeschlossen sind.

Das 4/3-Wegeventil weist drei Schaltstellungen auf, wobei in einer ersten, nicht dargestellten Schaltstellung die Druckpumpe P mit der Steuerleitung 11 verbunden ist während die Steuerleitung 10 zu dem Ölsumpf R führt. In einer zweiten, ebenfalls nicht dargestellten Schaltstellung ist die Druckpumpe P mit der Steuerleitung 10 verbunden, während die Steuerleitung 11 mit dem Ölsumpf R verbunden ist. In der dritten Schaltstellung, die in Fig. 5 gezeigt ist, sind beide Steuerleitungen 10 und 11 mit dem Ölsumpf R verbunden.

Bei dem hier gezeigten Ausführungsbeispiel sind die Zylinderkammern 20 und 21 des zweiten Zylinderabschnittes 17 jeweils mit einer Sperrleitung 29 bzw. 30 verbunden. Die beiden Sperrleitungen 29 und 30 münden in jeweils einen Eingang eines 2/2-Wegeventils 31, welches in einer ersten, in Fig. 5 gezeigten Schaltstellung die beiden Sperrleitungen 29 und 30 gegeneinander verriegelt, während es in einer zweiten, in der Zeichnung nicht dargestellten, Schaltstellung die beiden Sperrleitungen 29 und 30 verbindet, so daß der zweite Zylinderabschnitt 17 auf Umlauf geschaltet ist.

Im folgenden wird die Wirkungsweise des erfindungsgemäßen Langholztransporters näher erläutert.

Befindet sich der Langholztransporter 1 auf normaler Fahrt, beispielsweise auf einer Landstraße, so ist der Lenkzylinder 7 verriegelt. Das heißt, der Lenkzylinder 7 überträgt wie ein starrer Lenker eine Drehbewegung des Drehschemels 6 auf die Vorderachse 5. Eine solche Lenkbewegung ist in Fig. 2 schematisch dargestellt.

Die Fig. 5 zeigt den Lenkzylinder 7 in seiner verriegelten Stellung. Das 4/3-Wegeventil 26 der Nach-Lenkeinrichtung 12 befindet sich in Mittelstellung, so daß beide Steuerleitungen 10 und 11 mit einander verbunden sind. In den Steuerleitungen 10 und 11 kann sich daher kein Druck aufbauen, der ein Entriegeln der Rückschlagventile 22 und 23 bewirken könnte. Die mit Hydraulikflüssigkeit gefüllten Zylinderkammern 18 und 19 des ersten Zylinderabschnittes sind daher verriegelt, so daß eine Bewegung des Kolbens 13 und damit der Kolbenstange 8 nicht stattfinden kann.

Der bei deisem Ausführungsbeispiel als Zusatzsicherung ausgelegte zweite Zylinderabschnitt 17 hat ebenfalls verriegelte Zylinderkammern 20 und 21, da das 2/2-Wegeventil 31 sich in Verriegelungsstellung befindet.

Obwohl bei dieser festgesetzten Stellung des Lenkzylinders 7 keine Relativbewegung zwischen der Kolbenstange 8 und dem Zylindergehäuse 9 erfolgen kann, wirkt das Flüssigkeitspolster in den Zylinderkammern 18 bis 21 als Dämpfer für eventuelle Stöße auf den Lenkzylinder 7.

Befindet sich das Fahrzeug im Gelände, und will man die Zusatzlenkung zum Rangieren des Anhängers 3 benutzen, so wird das 2/2-Wegeventil 31 in seine zweite Schaltstellung gebracht, so daß die beiden Zylinderkammern 20 und 21 miteinander verbunden sind. Der zweite Zylinderabschnitt 17 ist damit auf Umlauf geschaltet, so daß die in den beiden Zylinderkammern 20 und 21 befindliche Hydraulikflüssigkeit keine Kräfte auf den Kolben 14 ausüben kann. Je nach gewünschten Lenkeinschlag, also ob nach rechts oder nach links, wird das 4/3-Wegeventil 26 in die erste oder die zweite Schaltstellung gebracht. In der ersten Schaltstellung, die stellvertretend für eine Lenkung des Anhängers nach rechts stets, ist die Hydraulikleitung 11 mit der Druckpumpe P verbunden, während die Hydraulikleitung 10 mit dem Ölsumpf R verbunden ist. In der Hydraulikleitung 11 baut sich somit ein Druck auf, der über die Hilfsleitung 25 auch auf das Rückschlagventil 22 der ersten Steuerleitung 10 übertragen wird. Dadurch wird das Rückschlagventil 22 entriegelt. Das Rückschlagventil 23 wird bereits dadurch entriegelt, daß in der Steuerleitung 11 ein erhöhter Druck herrscht. Durch die Steuerleitung 11 strömt somit Hydraulikflüssigkeit in die Zylinderkammer 19, während die in der Zylinderkammer 18 befindliche Hydraulikflüssigkeit über die Steuerleitung 10 zu dem Ölsumpf R fließt. Hierdurch ergibt sich eine Verschiebung der Kolbenstange 8 nach links, d.h. die Kolbenstange 8 wird ausgefahren, so daß sich bei Anordnung des Lenkzylinders 7 auf der linken Anhängerhälfte (vgl. Fig. 4) ein Lenkeinschlag der Vorderachse 5 nach rechts ergibt.

Für einen Lenkeinschlag nach links braucht das 4/3-Wegeventil 26 lediglich in die zweite Schaltstellung gebracht zu werden, in der die Steuerleitung 11 mit dem Ölsumpf R und die Steuerleitung 10 mit der Druckpumpe P verbunden sind.

Sobald das Fahrzeug das Gelände verlassen hat, werden das 4/3-Wegeventil 26 und das 2/2-Wegevenil 31 wieder in Verriegelungsstellung gebracht, so daß der Lenkzylinder starr bleibt.

Aus der obigen Beschreibung des Ausführungsbeispieles wird deutlich, daß für das Entriegeln des Lenkzylinders 7 zum Zwecke der aktiven Lenkung keinerlei zusätzliche Zeit benötigt wird. Das heißt, der Lenkzylinder 7 spricht sofort an, sobald die Lenkung betätigt wird. Der Schaltungsaufwand für die Betätigung des Lenkzylinders 7 und für dessen Verriegelung ist sehr gering.

Obwohl das Ausführungsbeispiel so beschrieben wurde, daß der zweite Zylinderabschnitt einfach durch Sperrleitungen 29 und 30 sowie ein 2/2-Wegeventil 31 verriegelt werden kann, ist es auch möglich, den zweiten Zylinderabschnitt 17 in gleicher Weise mit Steuerleitungen zu versehen wie den ersten Zylinderabschnitt 16.

Bei dem Zweikreiszylinder kann es sich auch um einen Gleichlaufzylinder handeln, d.h. um einen solchen Zylinder, bei dem die Kolbenstange auch die hintere Zylinderwand durchsetzt, so daß jeder Kolben gleiche wirksame Druckangriffsflächen aufweist.

Obwohl bei dem oben beschriebenen Ausführungsbeispiel die Leitungen 10 und 11 zu den Zylinderkammern 18 und 19 führen, wäre es auch möglich wenn diese Leitungen zu den Kammern 20 und 21 führen würden und zwar zusätzlich oder anstatt der Zuleitung zu den Kammern 18 und 19.

Um Leckagen auszugleichen kann auch vorgesehen sein, daß die Leitung 30 über eine nicht dargestellte, ein Rückschlagventil enthaltene Leitung mit der Leitung 10 verbunden ist.

## Patentansprüche

1. Langholztransporter mit einem Zugfahrzeug und einem wenigstens zweiachsigen Anhänger, der einen gegenüber seinem Fahrgestell drehbaren Drehschemel zur Aufnahme der Ladung und eine gelenkte Achse aufweist, die über mindestens einen festsetzbaren hydraulischen Lenkzylinder mit dem Drehschemel wirkungsverbunden ist, **dadurch gekennzeichnet,** daß der Lenkzylinder (7) als Zweikreiszylinder mit zwei über eine Kolbenstange (8) verbundenen Kolben (13, 14) ausgebildet ist.

2. Langholztransporter nach Anspruch 1, **dadurch gekennzeichnet,** daß der Lenkzylinder (7) einen ersten Zylinderabschnitt (16) und einen zweiten Zylinderabschnitt (17) aufweist, der gegenüber dem ersten Zylinderabschnitt (16) durch einen von der Kolbenstange (8) durchsetzten Zylinderboden (15) abgedichtet ist, wobei ein erster Kolben (13) in dem ersten Zylinderabschnitt (16) und ein zweiter Kolben (14) in dem zweiten Zylinderabschnitt (17) angeordnet ist und wobei ferner jeder Kolben (13; 14) den zugehörigen Zylinderabschnitt (16; 17) in zwei gegeneinander abgedichtete Zylinderkammern (18, 19; 20, 21) unterteilt.

3. Langholztransporter nach Anspruch 1 oder 2, **dadurch gekennzeichnet,** daß zumindest die Zylinderkammern (18, 19) des ersten Zylinderabschnitts (16) mit jeweils einer Steuerleitung (10, 11) verbunden sind, die an eine hydraulische Lenkeinrichtung (12) angeschlossen sind.

4. Langholztransporter nach einem der Ansprüche 1 bis 3, **dadurch gekennzeichnet,** daß in den Steuerleitungen (10, 11) Rückschlagventile (22, 23) angeordnet sind, die bei Druckanstieg in der jeweiligen Zylinderkammer (18 bzw. 19) schließen.

5. Langholztransporter nach einem der Ansprüche 1 bis 4, **dadurch gekennzeichnet,** daß die Rückschlagventile (22, 23) mit der jeweils anderen Steuerleitung (11, 10) über eine Hilfsleitung (24, 25) derart verbunden sind, daß das Rückschlagventil (22, 23) bei Druckanstieg in der anderen Steuerleitung (11 bzw. 10) geöffnet wird.

6. Langholztransporter nach einem der Ansprüche 1 bis 5, **dadurch gekennzeichnet,** daß die hydraulische Lenkeinrichtung (12) ein 4/3-Wegeventil aufweist, wobei an dessen zwei Eingängen jeweils eine Steuerleitung (10, 11) angeschlossen ist und wobei an jeweils einem der anderen Eingänge eine Druckpumpe (P) und ein Ölsumpf (R) angeschlossen sind.

7. Langholztransporter nach einem der Ansprüche 1 bis 6, **dadurch gekennzeichnet,** daß die Zylinderkammern (20, 21) des zweiten Zylinderabschnitts (17) jeweils mit einer Sperrleitung (29 bzw. 30) verbunden sind, wobei die beiden Sperrleitungen (29, 30) in jeweils einen Eingang eines 2/2-Wegeventiles münden, das in einer ersten Schaltstellung die Sperrleitungen (29, 30) verriegelt und in einer zweiten Schaltstellung die Sperrleitungen (29, 30) auf Umlauf schaltet.

## Claims

1. Transporter for long timber, having a tractor vehicle and a trailer with at least two axles, said trailer having a bogie which is rotatable relative to its chassis for receiving the load and an articulated axle which is operatively connected to the bogie via at least one fixable hydraulic steering cylinder, characterised in that the steering cylinder (7) is constructed as a dual-cycle cylinder having two pistons (13, 14) connected by a piston rod (8).

2. Transporter for long timber according to claim 1, characterised in that the steering cylinder (7) has a first cylinder section (16) and a second cylinder section (17) which is sealed off from the first cylinder section (16) by a cylinder base (15) through which the piston rod (8) passes, a first piston (13) being arranged in the first cylinder section (16) and a second piston (14) being arranged in the second cylinder section (17), each piston (13; 14) moreover dividing the associated cylinder section (16; 17) into two cylinder chambers (18, 19; 20, 21) which are sealed off from each other.

3. Transporter for long timber according to claim 1 or 2, characterised in that at least the cylinder chambers (18, 19) of the first cylinder section (16) are each connected to a control line (10, 11) attached to a hydraulic steering mechanism (12).

4. Transporter for long timber according to one of claims 1 to 3, characterised in that nonreturn valves (22, 23) which close when there is a rise in pressure in the associated cylinder chamber (18 or 19) are mounted in the control lines (10, 11).

5. Transporter for long timber according to one of claims 1 to 4, characterised in that the nonreturn valves (22, 23) are each connected to the other control line (11, 10) via an auxiliary line (24, 25) in such a way that the nonreturn valve (22, 23) is opened if there is a rise in pressure in the other control line (11 or 10, respectively).

6. Transporter for long timber according to one of claims 1 to 5, characterised in that the hydraulic steering mechanism (12) has a 4/3-way valve, a control line (10, 11) being connected to two inputs thereof and a pressure pump (P) and an oil sump (R) being connected to one of the other inputs thereof.

7. Transporter for long timber according to one of claims 1 to 6, characterised in that the cylinder chambers (20, 21) of the second cylinder section (17) are each connected to a blocking line (29 or 30), the two blocking lines (29, 30) each opening into an input of a 2/2-way valve which closes off the blocking lines (29, 30) in a first switch position and switches the blocking lines (29, 30) to allow circulation in a second switch position.

**Revendications**

1. Engin de transport de bois longs comportant un tracteur et une remorque à au moins deux essieux, laquelle est équipée d'une sellette d'accouplement articulée rotative par rapport à son châssis, pour la réception du chargement, et d'un essieu dirigé, lequel est solidaire avec la sellette d'accouplement par au moins un cylindre de direction hydraulique pouvant être bloqué, caractérisé par le fait que ledit cylindre de direction (7) est réalisé sous forme de cylindre à double circuit comportant deux pistons (13, 14) reliés par une tige de piston (8).

2. Engin transporteur de bois longs selon la revendication 1, caractérisé par le fait que le cylindre de direction (7) présente une première section cylindrique (16) et une deuxième section cylindrique (17), laquelle est rendue étanche par rapport à la première section cylindrique (16) au moyen d'un fond cylindrique (15) à travers lequel passe la tige de piston (8), un premier piston (13) étant disposé dans la première section cylindrique (16) et un deuxième piston (14) dans la deuxième section cylindrique (17), et en outre, chaque piston (13, 14) divisant la section cylindrique concernée en deux chambres cylindriques (18, 19 ; 20, 21) étanches l'une par rapport à l'autre.

3. Engin transporteur de bois longs selon la revendication 1 ou 2, caractérisé par le fait qu'au moins les chambres cylindres (18, 19) de la première section cylindrique (16) sont reliées chacune à une conduite de commande (10, 11), laquelle est raccordée à un dispositif de direction hydraulique (12).

4. Engin transporteur de bois long selon l'une des revendications 1 à 3, caractérisé par le fait que dans les conduites de commande (10, 11) sont disposés des clapets anti-retour (22, 23) qui se ferment lorsque la pression monte dans la chambre cylindrique respective (18 ou 19).

5. Engin transporteur de bois longs selon l'une des revendications 1 à 4, caractérisé par le fait que chacun des clapets anti-retour (22, 23) est relié respectivement à l'autre conduite de commande (10, 11) par une conduite auxiliaire (24, 25) de telle sorte que ledit clapet antiretour (22, 23) s'ouvre lorsque la pression monte dans l'autre conduite de commande (11 ou 10).

6. Engin transporteur de bois longs selon l'une des revendications 1 à 5, caractérisé par le fait que le dispositif de direction hydraulique (12) est équipé d'une vanne à 4/3 voies aux deux entrées de laquelle est raccordée respectivement une conduite de commande (10, 11), tandis que, à chacune des autres entrées, sont raccordées respectivement une pompe de compression (P) et un puisard à huile (R).

7. Engin transporteur de bois longs selon l'une des revendications 1 à 6, caractérisé par le fait que les chambres cylindriques (20, 21) de la deuxième section cylindrique (17) sont reliées chacune à une conduite d'arrêt (29) et (30), ces deux conduites d'arrêt (29, 30) débouchant chacune dans une entrée d'une vanne à 2/2 voies, laquelle ferme les conduites d'arrêt (29, 30) dans une première position de réglage et dans une deuxième position de réglage place lesdites conduites d'arrêt (29, 30) en circuit.

FIG.1

FIG.2

FIG.3

FIG.4

FIG.5

EP 0 312 815 B1